# EUROPEAN PATENT SPECIFICATION

(11) **EP 4 159 462 B1**
(45) Date of publication and mention of the grant of the patent: **18.09.2024**
(21) Application number: 21020658.7
(22) Date of filing: 30.12.2021
(51) Int. Cl.: B42D 25/36, D21H 21/40

(54) **CHROMOGENIC COPOLYMER, METHOD OF PRODUCING THE SAME, PRODUCTS INCORPORATING THE SAME AND METHOD FOR DETECTING COUNTERFEITING AND FOR PRODUCTS AUTHENTICATION**
CHROMOGENES COPOLYMER, VERFAHREN ZU SEINER HERSTELLUNG, PRODUKTE DAMIT UND VERFAHREN ZUR ERKENNUNG VON FÄLSCHUNGEN UND ZUR AUTHENTIFIZIERUNG VON PRODUKTEN
COPOLYMÈRE CHROMOGÈNE, SON PROCÉDÉ DE FABRICATION, PRODUITS LE COMPRENANT ET PROCÉDÉ DE DÉTECTION DE CONTREFAÇON ET D'AUTHENTIFICATION DE PRODUITS

(30) Priority: 30.09.2021 PT 2021117491
(43) Date of publication of application: 05.04.2023
(73) Proprietor: RAIZ - Instituto De Investigação Da Floresta E Papel, 3800-783 Eixo, Aveiro (PT); Universidad De Burgos, 09001 Burgos (ES); Universidade de Coimbra, 3004-531 Coimbra (PT)
(72) Inventor: Vallejos Calzada, Saul, 09001 BURGOS (ES); García Guembe, Marta, 09001 BURGOS (ES); Guirado Moreno, José Carlos, 09001 BURGOS (ES); Gracía Pérez, José Miguel, 09001 BURGOS (ES); Aguado Garcia, Roberto Juan, 3004-535 COIMBRA (PT); Monteiro Valente, Artur José, 3004-535 COIMBRA (PT); Mendes De Sousa, Antonio Paulo, 3800-783 EIXO (PT)

(56) References cited:
- EP-A1- 1 564 592
- WO-A1-2018/162396
- US-B1- 9 212 246
- PASCUAL BLANCA ET AL: "Sensory Polymeric Foams as a Tool for Improving Sensing Performance of Sensory Polymers", SENSORS, vol. 18, no. 12, 11 December 2008 (2008-12-11), pages 4378, XP055930875, Retrieved from the Internet <URL:https://www.ncbi.nlm.nih.gov/pmc/articles/PMC6308416/pdf/sensors-18-04378.pdf> DOI: 10.3390/s18124378

## Description

### FIELD OF THE INVENTION

The present invention relates to the area of sensor materials, more particularly in the area of chromogenic copolymers and their application in the detection of counterfeiting and authentication of products. Additionally, the invention relates to products that incorporate the copolymer and its method of obtaining it.

### BACKGROUND OF THE INVENTION

A study by the consultant company "Frontier Economics" [1] estimates that worldwide counterfeiting losses during 2022 will reach the alarming amount of 1.6-2.3 billion euros ("USD $1.90-$2.81 trillion" in the original). But what is less mentioned is the dissatisfaction by the consumer, who usually does not have the means to verify the authenticity of the products and documentation purchased. Counterfeit products are not only generally of poorer quality, they also involve funding from criminal organizations. Faced with such a serious problem, different inventions of anti-counterfeiting technologies have recently emerged, which often require additional equipment.

EP3078005B1 [2] features papers with watermarks that are sensitive to ultraviolet and infrared radiation. In JP6458658B2 [3], watermarks are sensitive to the voltage supplied by a current source. US10467447B1 [4] introduces a method for producing unique dendritic structures, which shows efficient adhesion to a paper substrate and which can be identified under a microscope or X-ray scanner.

US9658373B2 [5] provides a method for verifying the authenticity of bar codes based on a fluorescent material.

In scientific literature, luminescent pigments and inks and small particles (such as quantum dots) are the most common solutions proposed for paper authentication [6-9] . In these cases, excitation with ultraviolet radiation is necessary to reveal the markers, normally invisible to the naked eye. Furthermore, the use of complexes with metals, including heavy metals, affects the sustainability of these proposals.

US9212246B1 discloses methods of preparing a crosslinked polymer having increased chemical durability resulting from the inclusion of antioxidants, or free-radical scavengers, to neutralize the radicals causing polymer membrane degradation.

There is thus a need for a material for application in the detection of counterfeiting and authentication of products which overcomes the difficulties of the prior art, namely the identification and authentication of products in a simple, immediate and sustainable way, without the need to resort to any specific equipment and in a sustainable way. Additionally, this material should have a good affinity with cellulose or textile substrates and be easily incorporated into different products which allows its use as, and not limited to, liquid products, paints and coatings.

### SUMMARY OF THE INVENTION

The present invention according to the appended claims relates to a chromogenic copolymer comprising at least two monomeric units, of general formula I: 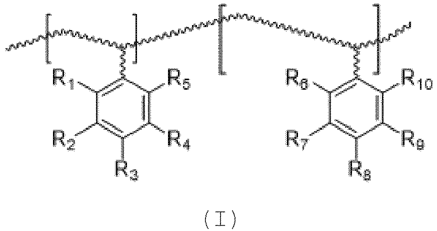 wherein at least one of the R1-R5 groups is an NH₂ group or contains an aromatic ring with an NH₂ group, and where at least one of the R6-R10 groups is an aromatic ring activating group.

In a preferred form of the invention the copolymer is described in which at least one of the R1-R5 groups is an NH₂ group and in that at least one of the R6-R10 groups is a OH group.

In a preferred form of the invention the copolymer is described in which at least one of the R1-R5 groups contains at least one aromatic ring substituted with an NH₂ group and in that at least one of the R6-R10 groups is an OH group.

In a preferred form of the invention the copolymer is described in which at least one of the R1-R5 groups is an NH₂ group and in that at least one of the R6-R10 groups contains at least one aromatic ring substituted with an OH group in at least one position.

In a preferred form of the invention the copolymer is described in which at least one of the R1-R5 groups is an NH₂ group and in that at least one of the R6-R10 groups contains at least one aromatic ring substituted, in at least one position, by a tertiary amino group.

In a preferred form of the invention, the copolymer is described in which at least one of the R1-R5 groups contains at least one aromatic ring substituted, in at least one position, by an NH₂ group, and in that at least one of the R6-R10 groups is substituted on the aromatic ring, in at least one position, by a tertiary amino group.

In a preferred form of the invention, the copolymer is described in which at least one of the monomeric units is a vinyl monomer, acrylate, methacrylate, acrylamide, methacrylamide, alcohol, monosaccharides, vinyl oxide, carboxylic diacid, acid dichloride, diester, diamine or silicon monomers.

In a preferred form of the invention the copolymer is soluble in solvents such as water, *N, N-*dimethylformamide, N-methyl-2-pyrrolidone, acetonitrile, ethanol, methanol, dimethylsulfoxide and N,N-dimethylacetamide.

The present invention further relates to a method of obtaining the copolymer which includes the following steps:
(a) copolymerization of at least two monomeric units, wherein at least one of the monomeric units contains an aromatic amino group and at least one of the monomeric units contains an activated aromatic ring, wherein the proportion of the unit containing an aromatic amino group represents at least 0.1% of the total number of monomer units;
(b) reaction of the copolymer obtained in step (a) with sodium nitrite in an aqueous acidic medium to produce a diazonium salt in the monomeric unit containing an aromatic amino group, and
(c) reaction in an aqueous basic medium of the copolymer obtained in step (b) through diazo coupling with the monomeric unit containing an activated aromatic ring.

The present invention further relates to a liquid product which includes the copolymer object of the present invention. In a preferred form of the invention this liquid product is sprayable.

The present invention further relates to a fiber that includes the copolymer object of the present invention.

The present invention further relates to an ink that includes the copolymer object of the present invention.

The present invention further relates to a coating for paper or textile material which includes the copolymer object of the present invention.

The present invention further relates to a paper or textile material that includes the copolymer object of the present invention.

The present invention further relates to a paper or textile material which includes the fiber described above and/or, on at least one of its surfaces, the ink described above and/or the coating described above.

The present invention further relates to a paper material that includes the copolymer object of the present invention such as packaging, printing and writing paper and cardboard.

The present invention further relates to a textile material that includes the copolymer object of the present invention as clothing, blanket, fabric for decoration or furniture, fabric for filtration and tissue paper.

The present invention further relates to a method of preparing paper or textile materials that include the copolymer object of the present invention, described by the following steps:
a) applying to one or more surfaces of a paper or textile material of the liquid product that includes the copolymer object of the present invention; or
b) applying to one or more surfaces of a paper or textile material the ink that includes the copolymer object of the present invention and/or the coating that includes the copolymer object of the present invention; or
c) production of a paper or textile material, or at least one of its parts, using the fiber that includes the copolymer object of the present invention.

The present invention further relates to a method of detecting counterfeiting and for authenticating products that includes the following steps:
a) spraying a paper or textile material comprising the copolymer object of the present invention with an acidic solution of nitrites;
b) observing the change in color of the surface of the paper or textile material.

In a preferred form of the invention the method further includes a step of spraying the paper or textile material with an alkaline solution after step a).

### BRIEF DESCRIPTION OF THE DRAWINGS

Figure 1. Purpose of the invention, showing an application example in packaging. The color, in addition to being directly visualized with the naked eye, can be identified by its RGB coordinates in 3×8 bits, easily estimated using a mobile phone using, for example, the "Colorimetric Titration" app.
Figure 2. General structure of the synthesized polymers, based on a matrix and two chromogens. The matrix consists of 1-vinyl-2-pyrrolidone (49% mol/mol) and methylmethacrylate (49% mol/mol). The chromogenic part is based on a monomer containing a primary amino group (A, A1-3; 1%, mol/mol) and a monomer with an activated ring (B, B1-4; 1%, mol/mol).
Figure 3. Paper discs impregnated with different chromogenic polymers, before (a) and after (b) spraying the sodium nitrite solution. RGB coordinates are also displayed (c), whenever the brightness of the photo is corrected for the same color reference through the color curves.
Figure 4. Azo-coupling reaction in the chromogenic copolymer, showing an example in which the A unit is A2 and the B unit is B4. A proof of immersion in water and in propylene carbonate is also shown: in water there is no elution of the copolymer.
Figure 5. Titration of paper discs coated with the polymer formed by 1-vinyl-2-pyrrolidone (49%, mol/mol), methylmethacrylate (49%, mol/mol), A2 (1%, mol/mol) and B4 (1%, mol/mol), with different doses of sodium nitrite. The RGB parameters were extracted from the digital photography of the samples.
Figure 6. Study with different polymeric matrices, involving the monomers: 1-vinyl-2-pyrrolidone, methylmethacrylate, 2-hydroxyethylmethacrylate, (2-dimethylaminoethyl)methacrylate. This study allowed us to conclude that the most appropriate matrix is constituted by methylmethacrylate and 1-vinyl-2-pyrrolidone.
Figure 7. Spectroscopic characterization of the synthesized A2 unit (a) : Fourier transform infrared spectrum (b), proton nuclear magnetic resonance spectrum (c), and carbon-13 nuclear magnetic resonance spectrum (d) .
Figure 8. Spectroscopic characterization of the synthesized A3 unit (a) : Fourier transform infrared spectrum (b), proton nuclear magnetic resonance spectrum (c), and carbon-13 nuclear magnetic resonance spectrum (d) .
Figure 9. Spectroscopic characterization of the synthesized B3 unit (a): Fourier transform infrared spectrum (b), proton nuclear magnetic resonance spectrum (c), and carbon-13 nuclear magnetic resonance spectrum (d) .
Figure 10. Spectroscopic characterization of the synthesized B4 unit (a): Fourier transform infrared spectrum (b), proton nuclear magnetic resonance spectrum (c), and carbon-13 nuclear magnetic resonance spectrum (d) .
Figure 11. Spectroscopic characterization of a copolymer containing A1 and B1 units and producing yellow color: absorption spectrum in the visible region (a), Fourier transform infrared spectrum (b), proton nuclear magnetic resonance spectrum (c), and carbon-13 nuclear magnetic resonance spectrum (d).
Figure 12. Spectroscopic characterization of a copolymer containing A1 and B4 units and producing pink color: absorption spectrum in the visible region (a), Fourier transform infrared spectrum (b), proton nuclear magnetic resonance spectrum (c), and carbon-13 nuclear magnetic resonance spectrum (d).
Figure 13. Spectroscopic characterization of a copolymer containing A2 and B4 units and producing a violet color: absorption spectrum in the visible region (a), Fourier transform infrared spectrum (b), proton nuclear magnetic resonance spectrum (c), and carbon-13 nuclear magnetic resonance spectrum (d).
Figure 14. Spectroscopic characterization of a copolymer containing A3 and B4 units and producing a green color: absorption spectrum in the visible region (a), Fourier transform infrared spectrum (b), proton nuclear magnetic resonance spectrum (c), and carbon-13 nuclear magnetic resonance spectrum (d).

### DETAILED DESCRIPTION OF THE INVENTION

A sensor and chromogenic copolymer is defined here, as described in this invention and claim 1, which allows a new verification and authentication technique, simple and sustainable, with security and anti-counterfeiting applications, based on an organic material with properties of colorimetric sensor, without the need to use any specific equipment. Simultaneously, this material is a copolymer based on commercially available monomers, which have a good affinity with surfaces of, for example, any paper or textile material, includes sensor or responsive units and is easily incorporated in different products that allow its use as, and not limited to, liquid products, paints and coatings.

The end user only needs to apply an extremely inexpensive aqueous solution of sodium nitrite (example: using a sprayer or a pen), and the chromogenic copolymer changes color under visible light; i.e. with the naked eye. The cause of this color change is an azo coupling reaction between the sensing units of the polymer. Depending on the combination of these units, different azo dyes, having different colors, are formed. In this way, a much greater chromatic variety is achieved than in the cellulosic sensor for nitrites as proposed in the literature, such as in CN102175680B [10], where the Griess reaction produces a reddish color (with absorption at 525 nm), which is suitable for detecting nitrite in water but does not provide authentication applications. The possibility of obtaining different colors makes it possible, allowing a large number of color codes to the consumer.

Within the scope of the present invention chromogenic means capable of producing color, with light absorption in the visible region, by means of a chemical reaction.

Within the scope of the present invention aromatic ring activating group means a functional group which makes some of the positions of the aromatic ring more nucleophilic.

Within the scope of the present invention activated aromatic ring relates to an aromatic ring substituted with at least one electron donor group.

Within the scope of the present invention an amino group means a functional group containing a nitrogen atom with a free pair of electrons, with the chemical formula - NH₂, -NH- or >N-, such that the nitrogen atom is bonded to at least one carbon atom, and none of the carbon atoms attached to the nitrogen atom has a double bond with an oxygen atom (>C=O).

Within the scope of the present invention a primary amino group means a functional group with the chemical formula -NH₂ where the nitrogen atom is attached to a single carbon atom.

Within the scope of the present invention primary aromatic amino group means a functional group with the chemical formula -NH₂, -NH- or >N-, such that the nitrogen atom is bonded to, at least, one aromatic ring-membered carbon atom.

Within the scope of the present invention hydroxyl group means a functional group consisting of an oxygen atom covalently bonded to a hydrogen atom, with the chemical formula -OH.

Within the scope of the present invention diazonium salt means an electrolyte of chemical formula R-N₂⁺X⁻ , where R is an organic group and X⁻ is an organic or inorganic counteranion.

Within the scope of the present invention tertiary amino group means (>N-), such that the nitrogen atom is bonded to three carbon atoms.

Within the scope of the present invention azo coupling means a reaction between a diazonium compound or monomer and a compound or monomer with, at least, one activated aromatic ring, to produce an -N=N- bond.

Within the scope of the present invention sprayable means that it can be reduced to very fine droplets or particles.

Within the scope of the present invention silicon monomers means any units with, at least, one silicon atom (>Si<), such as silane, vinylsilane or trimethylvinylsilane.

Within the scope of the present invention, a fiber refers to any cellulosic fiber and its derivatives or textile of vegetable, animal and artificial origin. Such as, but not limited to, cellulose acetate, cotton, hemp, linen, wool, cashmere, Rayon, Lyocell, Nylon, polyester, polyamide, among others.

The present invention thus relates to a copolymer with good affinity for cellulosic substrates and with sensory and chromogenic properties. The matrix of this copolymer contains units such that, when applied, the coating of the paper or textile material is successful and, at the same time, does not allow its elution by water. Examples: methylmethacrylate, 2-hydroxyethylmethacrylate, 1-vinyl-2-pyrrolidone. The sum of these monomers constitutes more than 80% of the monomeric units of the copolymer. A radical polymerization is carried out involving the matrix units and two sensor and chromogenic monomers (>0.1%, mol/mol). One of them has a primary amino group (unit A); the other monomer contains an activated aromatic ring (B unit). Once polymerization is complete, the polymer can be precipitated with a non-polar organic solvent.

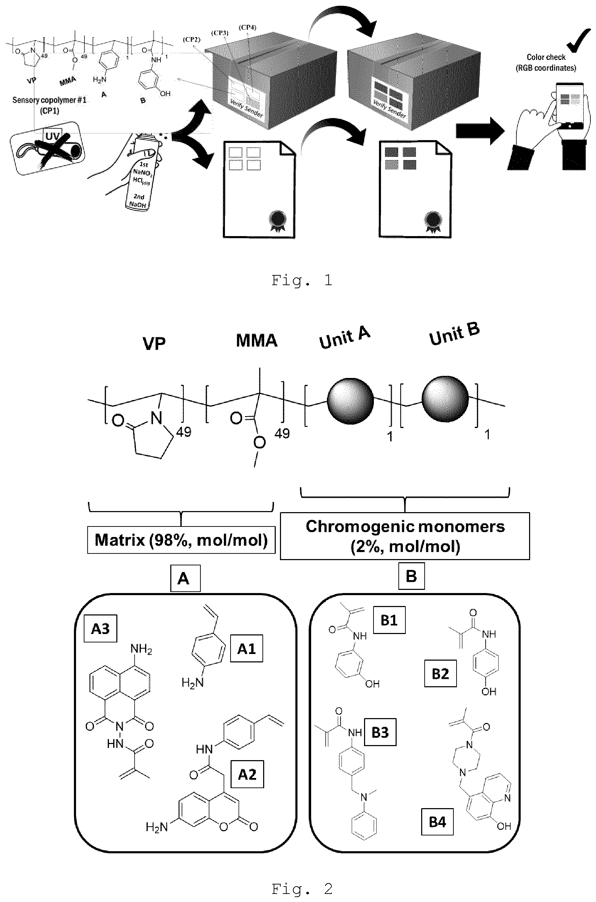

The invention also relates to a method of preparing paper or textile materials that involves the application of the copolymer described above, these materials used for packaging, documents or any other related products (Figure 1). The copolymer can be dissolved in a polar organic solvent of appropriate volatility, in such a way that this solution is incorporated, as a liquid product, ink or coating, in and/or on any paper or textile material, consisting mainly of cellulose, such as packaging, printing and writing paper and cardboard. Depending on the combination, the paper turns white or yellow, but changes color immediately after contact with an acidic nitrite solution and, then, with a sodium hydroxide solution (Figures 2, 3, 4). Alternatively, without hydroxide, the reaction kinetics with chromogenic groups is slower.

Equimolar combinations between three different A-units and four different B-units lead to different colors.

### I) Copolymer matrix

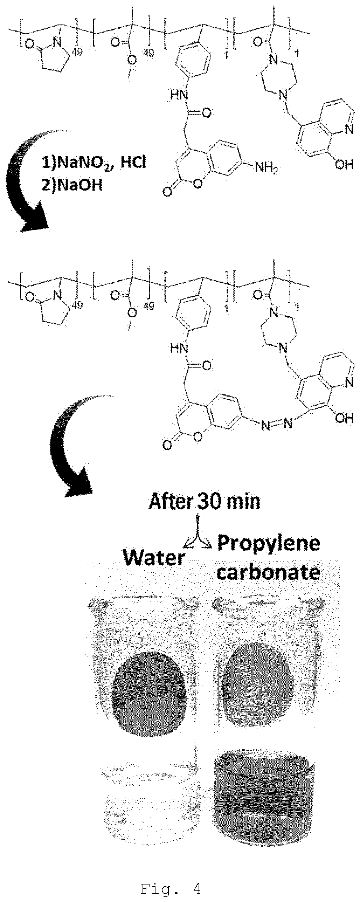

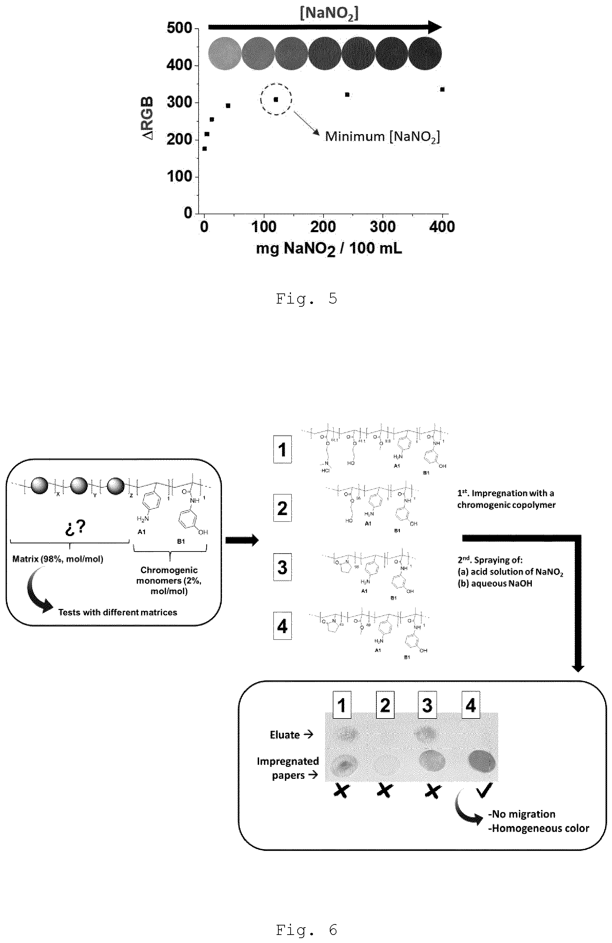

The polymer matrix consists of a combination of monomers forming a polymer with good affinity for cellulose and is insoluble in water, so that it does not elute from the paper sample when it comes into contact with water or aqueous solutions, including the solution of nitrite (Figures 4 and 5).

In one of the examples of this invention, the polymer matrix is constituted, for example, by 1-vinyl-2-pyrrolidone and methylmethacrylate. The sensor or chromogenic copolymer is prepared by mixing equimolar or different amounts of these compounds together with amounts (at least 0.1% mol/mol) of the chromogenic units. The polymer matrix consists of any two of these monomers, such as, for example: 1-vinyl-2-pyrrolidone, methylmethacrylate, 2-hydroxyethylmethacrylate, (2-dimethylaminoethyl) methacrylate, acrylic acid, sodium acrylate, vinyl acetate, vinylsilane, diacetate of allylidene, terephthalic acid, terephthaloyl chloride, methacrylamide, 2-hydroxyethyl methacrylate, glycidyl methacrylate, dodecyl methacrylate, butyl acrylate (Figure 6).

### II) Chromogenic units

The A unit is a compound with at least one primary amino group (-NH₂), such as for example 4-vinylaniline, and the B unit is a monomer with at least one activated aromatic ring (example: with hydroxyl groups and/or tertiary amino).

In one of the examples of this invention the A unit is 4-vinylaniline ("A1" in Figure 2), commercially available (CAS 1520-21-4).

In one of the examples of this invention, unit A is synthesized from 3-aminophenol (CAS 591-27-5), obtaining a poly-heterocyclic compound with a secondary amide group and a primary amino group ("A2" in Figure 2).

In one of the examples of this invention, unit A is synthesized from 4-amino-1,8-naphthalic anhydride (CAS 6492-86-0), obtaining a poly-heterocyclic hydrazine ("A3" in Figure 2).

In one of the examples of this invention the B unit is 3-acetamidophenol ("B1" in Figure 2), commercially available (CAS 621-42-1).

In one example of this invention the B unit is N-(4-hydroxyphenyl)methacrylamide ("B2" in Figure 2), commercially available (CAS 19243-95-9).

In one of the examples of this invention, unit B is synthesized from 4-aminobenzyl alcohol (CAS 623-04-1), obtaining a polycyclic amide with a tertiary amino group ("B3" in Figure 2) .

In one of the examples of this invention the B unit is synthesized from two commercially available compounds: N-hydroxysuccinimide (CAS 57260-71-6) and 8-hydroxyquinoline (CAS 148-24-3). The resulting poly- and heterocyclic compound is "B4" in Figure 2.

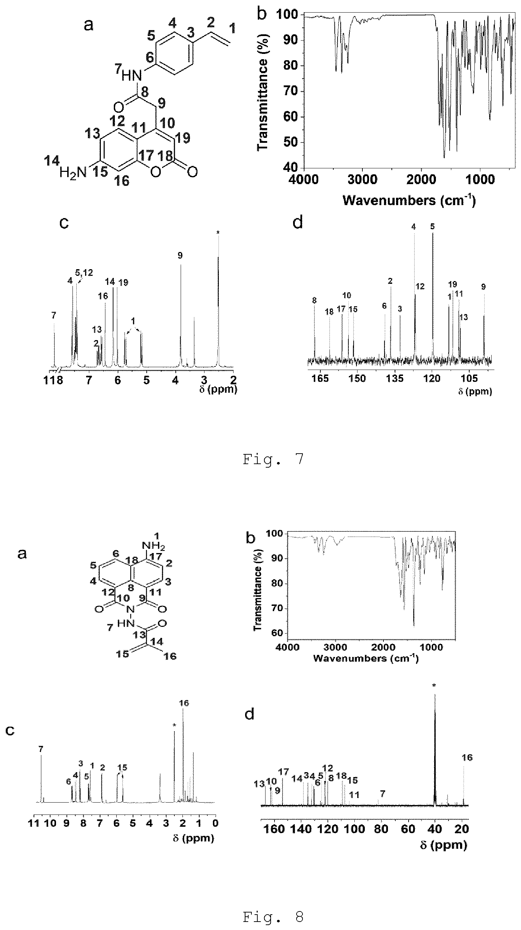

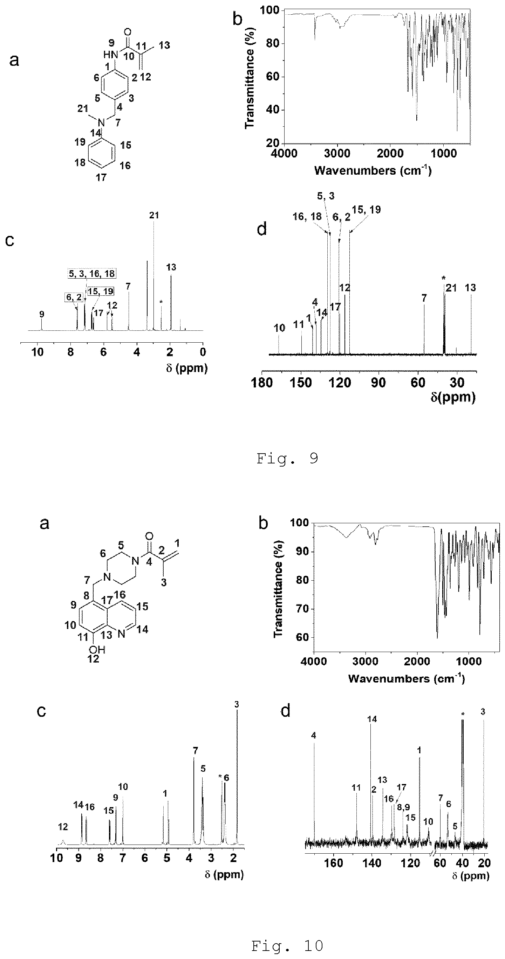

Figures 7-10 show the spectroscopic (infrared and nuclear magnetic resonance) characterization of the synthesized monomers: A2, A3, B3, B4.

### III) Polymerization

The synthesis of the copolymer is carried out by radical polymerization, using an appropriate initiator and a polar organic solvent.

In one of the examples of this invention, the different monomeric units, i.e., the units that form the polymer matrix and the chromogenic units A and B, were dissolved in N,N-dimethylformamide (DMF), in a molar ratio 49:49:1:1, respectively. The initiator, e.g., azo-bisisobutyronitrile (AIBN) was then added. The solution was sonicated, heated and held at 50-70 °C for about 12 hours without stirring.

The polymer, in each case, was precipitated with diethyl ether or another non-polar organic solvent. All polymers generated were purified by means of a Soxhlet extractor. The yield was 80-85%. Twelve combinations of A and B unities were prepared for the same polymer matrix (1-vinyl-2-pyrrolidone and methylmethacrylate) , resulting in 12 different polymers with the same matrix, each with a different response, in terms of color, on contact with a nitrite solution.

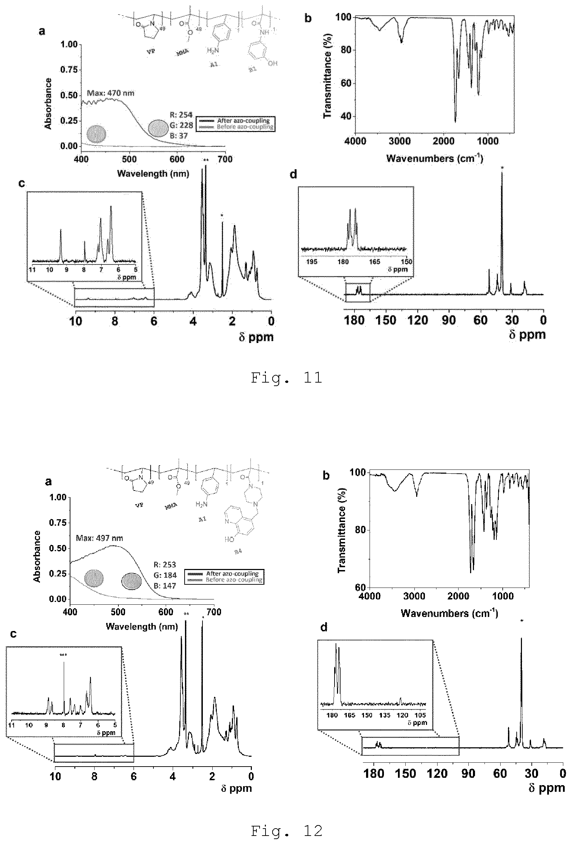

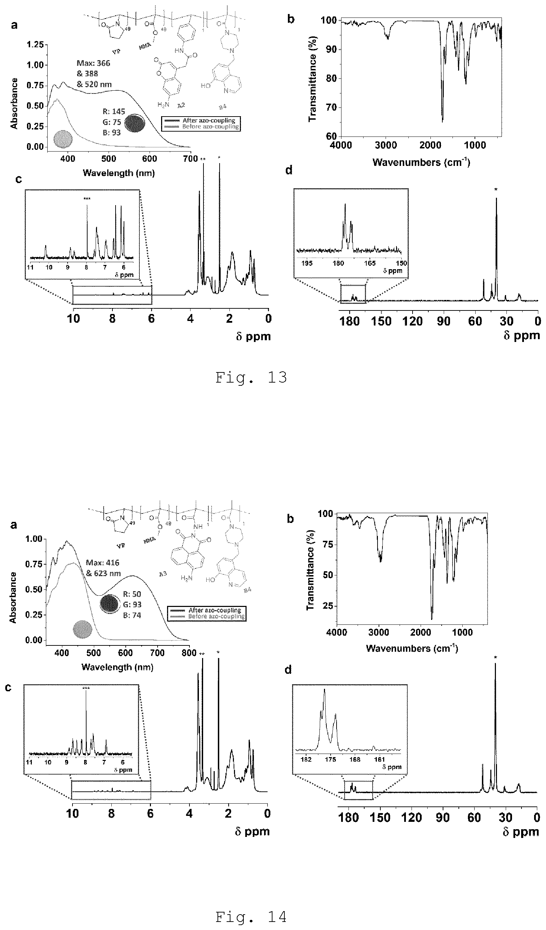

Figures 11-14 contain the spectroscopic (visible, infrared, and nuclear magnetic resonance region) characterization of four of the possible chromogenic copolymers, which show clearly different colors when forming the azo dye.

### IV) Paper coating

For the constitution of liquid products, paints and coatings that incorporate the copolymers described in this invention, the polymers obtained can be dissolved in different organic solvents with appropriate volatility, including acetonitrile and short-chain alcohols. Dissolving in DMF, dimethylsulfoxide or other high-boiling solvents is not recommended as it requires long drying times for the coated paper.

The coating can be done by dipping, deposition, bar/roll, knife, curtain, or any other way of dispensing a liquid onto the surface of a paper or textile material.

### V) Verification

Coated papers, depending on the combination of A and B units, retain the original paper color or turn slightly yellow. Only when an acidic nitrite solution is sprayed is one of the different colors revealed. 100 ml of this acidic solution contains at least 0.05 g of sodium nitrite (Figure 5). Alternatively, other nitrite salts can be used, such as potassium nitrite or ammonium nitrite. Acidity can be achieved by adding 1-20 mL of 37% HCl (w/w) per 100 mL of solution.

The color change takes place 30-60 min after applying the acidic nitrite solution, or immediately after spraying with an alkaline solution such as sodium hydroxide.

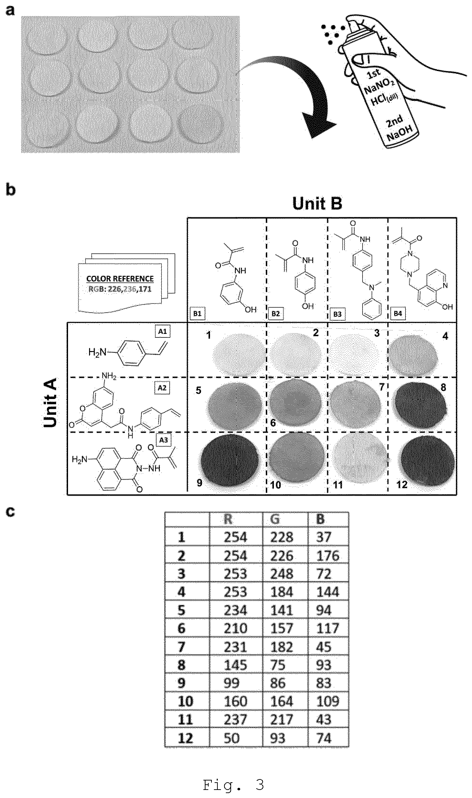

The acidic nitrite solution was sprayed onto twelve paper discs, each containing a different combination of A and B units. Subsequently, a sodium hydroxide "spray" was applied, immediately observing a different color on each paper disc, including yellow, orange, green, purple, reddish, pink, gray, and some intermediate colors (Figure 3).

### Example

Let the A unit be "A1", i.e., 4-vinylaniline. Let the B unit be "B2", i.e., N-(4-hydroxyphenyl)methacrylamide.

45 mmol of 1-vinyl-2-pyrrolidone, 45 mmol of methylmethacrylate, 0.94 mmol of A unit and 0.94 mmol of B unit were dissolved in 46 ml of DMF. Then azo-bisisobutyronitrile (AIBN) as initiator was added in an amount of 4.6 mmol. The solution was sonicated for 10 min. Then, it was kept at 60 °C for 18 h, without stirring and under an inert atmosphere (nitrogen). The abovementioned amount of AIBN guarantees a molecular weight distribution of approximately 1000 Da (measured by time-of-flight mass spectrometry ), which favors solubility and does not reach excessive viscosity.

The solution was allowed to cool up to room temperature. Then, it was added, drop by drop, to diethyl ether (300 ml) under strong stirring. The polymer obtained was then purified by means of a Soxhlet extractor.

100 mg of chromogenic copolymer was dissolved in 1 ml of acetonitrile. 50 microliters of this solution was deposited on the surface of a paper disk with 2 cm in diameter, and the solvent was evaporated at 60°C for 5 min. The resulting paper was white in color, just like the original paper.

A solution was prepared with 25 ml of water, 2.5 ml of 37% HCl and 0.1 g of sodium nitrite. In this case, by spraying the paper containing the chromogenic agent with the acidic nitrite solution and then with a 1 M sodium hydroxide solution, the paper showed, as soon as the last one was applied, a pink color.

### References

[1] Frontier Economics, 2017. The Economic Costs of Counterfeiting and Piracy, 2017. https://www.iccwbo.be/wp-content/uploads/2017/06/ICC-BASCAP-Frontier-report-2016-Executive-Summary.pdf.
[2] W. Blake, J. Boody, K.M. Brigham, J. Callahan, P.F. Cote, M. Darroch, M. Jain, K.M. Hamilton, G.D. Prett, A security sheet or document having one or more enhanced watermarks, EP3078005B1, 2014.
[3] H. Ide, Watermark paper, JP6458658B2, 2015.
[4] M.N. Kozicki, Image processing of dendritic structures used in tags as physical unclonable function for anti-counterfeiting, US10467447B1, 2019.
[5] E.A. Downing, Anti-copy optical materials and methods, US9658373B2, 2015.
[6] M. You, J. Zhong, Y. Hong, Z. Duan, M. Lin, F. Xu, Inkjet printing of upconversion nanoparticles for anti-counterfeit applications, Nanoscale. 7 (2015) 4423-4431. https://doi.org/10.1039/c4nr06944g.
[7] K. Jiang, L. Zhang, J. Lu, C. Xu, C. Cai, H. Lin, Triple-Mode Emission of Carbon Dots: Applications for Advanced Anti-Counterfeiting, Angew. Chemie - Int. Ed. 55 (2016) 7231-7235. https://doi.org/10.1002/anie.201602445.
[8] S. Devadas, E. Suh, S. Paral, R. Sowell, T. Ziola, V. Khandelwal, Design and implementation of PUF-based "unclonable" RFID ICs for anti-counterfeiting and security applications, 2008 IEEE Int. Conf. RFID (Frequency Identification), IEEE RFID 2008. (2008) 58-64. https://doi.org/10.1109/RFID.2008.4519377.
[9] J. Andres, R.D. Hersch, J.E. Moser, A.S. Chauvin, A new anti-counterfeiting feature relying on invisible luminescent full color images printed with lanthanide-based inks, Adv. Funct. Mater. 24 (2014) 5029-5036. https://doi.org/10.1002/adfm.201400298.
[10] J. Huang, X. Zhang, W. Xiao Wei, Preparation method of nitrite ion colorimetric sensing cellulose material, CN102175680B, 2011.

## Claims

1. A chromogenic copolymer, comprising at least two monomeric units, of general formula I: 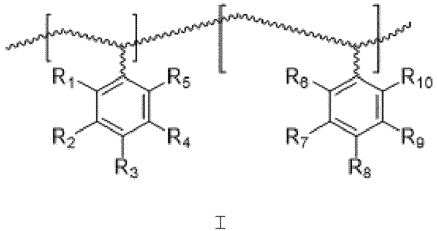 wherein at least one of the R1-R5 groups is an NH₂ group or contains an aromatic ring with an NH₂ group, and wherein at least one of the R6-R10 groups is an aromatic ring activating group, and in which the proportion of any of the monomeric units represents at least 0.1% of the total number of monomer units.

2. The copolymer according to claim 1, wherein at least one of the groups R1-R5 is an NH₂ group and at least one of the groups R6-R10 is an OH group.

3. The copolymer according to claim 1, wherein at least one of the groups R1-R5 contains at least one aromatic ring substituted with an NH₂ group and at least one of the groups R6-R10 is an OH group.

4. The copolymer according to claim 1, wherein at least one of the groups R1-R5 is an NH₂ group and at least one of the groups R6-R10 contains at least one aromatic ring substituted with an OH group in at least one position.

5. The copolymer according to claim 1, wherein at least one of the groups R1-R5 is an NH₂ group and that at least one of the groups R6-R10 contains at least one aromatic ring substituted, in at least one position, by a tertiary amino group.

6. The copolymer according to claim 1, wherein at least one of the R1-R5 groups contains at least one aromatic ring substituted, in at least one position, by an NH₂ group, and at least one of the R6-R10 groups is substituted on the aromatic ring, in at least one position, by a tertiary amino group.

7. The copolymer according to any one of the preceding claims, wherein at least one of the monomeric units is selected from the group of monomers consisting of vinyls, acrylates, methacrylates, acrylamides, methacrylamides, alcohols, monosaccharides, vinyl oxides, carboxylic diacids, dichlorides of silicon acid, diesters, diamines and monomers.

8. A method for obtaining the copolymer according to any one of the claims 1 to 7, comprising the following steps:
(a) reacting by copolymerization at least two monomeric units, wherein at least one of the monomeric units contains an aromatic amino group and at least one of the monomeric units contains an activated aromatic ring, wherein the proportion of the unit containing an aromatic amino group represents at least 0.1% of the total number of monomer units;
(b) reacting the copolymer obtained in step (a) with sodium nitrite in aqueous medium acid to produce a diazonium salt in the monomeric unit containing an aromatic amino group, and
(c) reacting in an aqueous basic medium the copolymer obtained in step (b) through azo coupling with the monomeric unit containing an activated aromatic ring.

9. Product comprising the copolymer according to any one of the claims 1 to 7 selected from the group consisting of liquid products, fibers, inks and coatings for paper or textile materials and paper and textile materials.

10. Paper or textile material comprising a fiber according to claim 9 and/or, on at least one of its surfaces, the ink according to the preceding claim and/or the coating according to the preceding claim.

11. Paper or textile material according to claim 10, selected from the group consisting of packaging, printing and writing paper, cardboard, clothing, blanket, fabric for decoration or furniture, fabric for filtration and tissues.

12. Method of preparing paper or textile materials comprising the copolymer according to any one of the claims 1 to 7, **characterized in that** it comprises the following steps:
a) applying to one or more surfaces of a paper or textile material the liquid product according to claim 9; or
b) applying to one or more surfaces of a paper or textile material the ink according to claim 9 and/or the coating according to claim 9; or
c) producing a paper or textile material, or at least one of its parts, using the fiber according to claim 9.

13. Method for detecting counterfeiting and product authentication comprising the following steps:
a) spraying a paper or textile material comprising the copolymer according to any one of the claims 1 to 7 with an acidic solution of nitrites;
b) observing the change in color of the surface of the paper or textile material;
c) and further comprising a step of spraying the paper or textile material with an alkaline solution after step a).

## Patentansprüche

1. Chromogenes Copolymer, das mindestens zwei monomere Einheiten der allgemeinen Formel I umfasst: 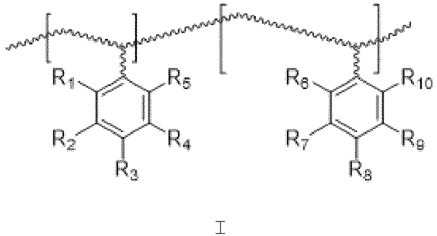 worin mindestens eine der R1-R5-Gruppen eine NH₂-Gruppe ist oder einen aromatischen Ring mit einer NH₂-Gruppe enthält, und worin mindestens eine der R6-R10-Gruppen eine den aromatischen Ring aktivierende Gruppe ist, und worin der Anteil einer der Monomereinheiten mindestens 0,1 % der Gesamtzahl der Monomereinheiten ausmacht.

2. Copolymer nach Anspruch 1, wobei mindestens eine der Gruppen R1-R5 eine NH₂-Gruppe ist und mindestens eine der Gruppen R6-R10 eine OH-Gruppe ist.

3. Copolymer nach Anspruch 1, wobei mindestens eine der Gruppen R1-R5 mindestens einen mit einer NH₂-Gruppe substituierten aromatischen Ring enthält und mindestens eine der Gruppen R6-R10 eine OH-Gruppe ist.

4. Copolymer nach Anspruch 1, wobei mindestens eine der Gruppen R1-R5 eine NH₂-Gruppe ist und mindestens eine der Gruppen R6-R10 mindestens einen aromatischen Ring enthält, der in mindestens einer Position mit einer OH-Gruppe substituiert ist.

5. Copolymer nach Anspruch 1, wobei mindestens eine der Gruppen R1-R5 eine NH₂-Gruppe ist und mindestens eine der Gruppen R6-R10 mindestens einen aromatischen Ring enthält, der in mindestens einer Position durch eine tertiäre Aminogruppe substituiert ist.

6. Copolymer nach Anspruch 1, wobei mindestens eine der Gruppen R1-R5 mindestens einen aromatischen Ring enthält, der in mindestens einer Position durch eine NH₂-Gruppe substituiert ist, und mindestens eine der Gruppen R6-R10 an dem aromatischen Ring in mindestens einer Position durch eine tertiäre Aminogruppe substituiert ist.

7. Copolymer nach einem der vorhergehenden Ansprüche, wobei mindestens eine der Monomereinheiten aus der Gruppe der Monomere ausgewählt ist, die aus Vinyl, Acrylaten, Methacrylaten, Acrylamiden, Methacrylamiden, Alkoholen, Monosacchariden, Vinyloxiden, Carbonsäuredisäuren, Dichloriden der Siliciumsäure, Diestern, Diaminen und Monomeren besteht.

8. Verfahren zur Herstellung des Copolymers nach einem der Ansprüche 1 bis 7, umfassend die folgenden Schritte:
(a) Umsetzung von mindestens zwei Monomereinheiten durch Copolymerisation, wobei mindestens eine der Monomereinheiten eine aromatische Aminogruppe enthält und mindestens eine der Monomereinheiten einen aktivierten aromatischen Ring enthält, wobei der Anteil der Einheit, die eine aromatische Aminogruppe enthält, mindestens 0,1 % der Gesamtzahl der Monomereinheiten ausmacht;
(b) Umsetzen des in Schritt (a) erhaltenen Copolymers mit Natriumnitrit in einer wässrigen Mediumssäure, um ein Diazoniumsalz in der Monomereinheit, die eine aromatische Aminogruppe enthält, herzustellen, und
(c) Umsetzen des in Schritt (b) erhaltenen Copolymers in einem wässrigen basischen Medium durch Azokupplung mit der monomeren Einheit, die einen aktivierten aromatischen Ring enthält.

9. Produkt, das das Copolymer nach einem der Ansprüche 1 bis 7 enthält, ausgewählt aus der Gruppe bestehend aus flüssigen Produkten, Fasern, Druckfarben und Beschichtungen für Papier oder Textilmaterialien und Papier- und Textilmaterialien.

10. Papier oder textiles Material, das eine Faser nach Anspruch 9 und/oder auf mindestens einer seiner Oberflächen die Druckfarbe nach dem vorhergehenden Anspruch und/oder die Beschichtung nach dem vorhergehenden Anspruch enthält.

11. Papier- oder Textilmaterial nach Anspruch 10, ausgewählt aus der Gruppe bestehend aus Verpackungs-, Druck- und Schreibpapier, Karton, Kleidung, Decken, Gewebe für Dekoration oder Möbel, Gewebe für Filtration und Gewebe.

12. Verfahren zur Herstellung von Papier- oder Textilmaterialien, die das Copolymer nach einem der Ansprüche 1 bis 7 enthalten, **dadurch gekennzeichnet, dass** es die folgenden Schritte umfasst:
a) Auftragen des flüssigen Produkts nach Anspruch 9 auf eine oder mehrere Oberflächen eines Papier- oder Textilmaterials; oder
b) Aufbringen der Druckfarbe nach Anspruch 9 und/oder der Beschichtung nach Anspruch 9 auf eine oder mehrere Oberflächen eines Papier- oder Textilmaterials; oder
c) Herstellen eines Papiers oder textilen Materials oder mindestens eines seiner Teile unter Verwendung der Faser nach Anspruch 9.

13. Verfahren zur Fälschungserkennung und Produktauthentifizierung, das folgende Schritte umfasst:
a) Besprühen eines Papier- oder Textilmaterials, das das Copolymer nach einem der Ansprüche 1 bis 7 enthält, mit einer sauren Lösung von Nitriten;
b) Beobachtung der Farbveränderung der Oberfläche des Papiers oder des Textilmaterials;
c) und ferner einen Schritt des Besprühens des Papiers oder des Textilmaterials mit einer alkalischen Lösung nach Schritt a) umfasst.

## Revendications

1. Copolymère chromogène, comprenant au moins deux unités monomères, de formule générale I: 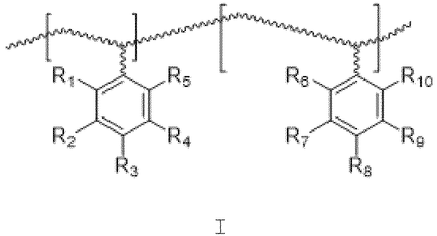 dans lequel au moins un des groupes R1-R5 est un groupe NH ou contient un cycle aromatique avec un groupe NH₂, et dans lequel au moins un des groupes R6-R10 est un groupe activateur de cycle aromatique, et dans lequel la proportion de l'une quelconque des unités monomères représente au moins 0,1 % du nombre total d'unités monomères.

2. Copolymère selon la revendication 1, dans lequel au moins un des groupes R1-R5 est un groupe NH₂ et au moins un des groupes R6-R10 est un groupe OH.

3. Copolymère selon la revendication 1, dans lequel au moins un des groupes R1-R5 contient au moins un cycle aromatique substitué par un groupe NH₂ et au moins un des groupes R6-R10 est un groupe OH.

4. Copolymère selon la revendication 1, dans lequel au moins un des groupes R1-R5 est un groupe NH₂ et au moins un des groupes R6-R10 contient au moins un anneau aromatique substitué par un groupe OH dans au moins une position.

5. Copolymère selon la revendication 1, dans lequel au moins un des groupes R1-R5 est un groupe NH₂ et dans lequel au moins un des groupes R6-R10 contient au moins un anneau aromatique substitué, dans au moins une position, par un groupe amino tertiaire.

6. Copolymère selon la revendication 1, dans lequel au moins un des groupes R1-R5 contient au moins un cycle aromatique substitué, dans au moins une position, par un groupe NH₂, et au moins un des groupes R6-R10 est substitué sur le cycle aromatique, dans au moins une position, par un groupe amino tertiaire.

7. Copolymère selon l'une quelconque des revendications précédentes, dans lequel au moins une des unités monomériques est choisie dans le groupe des monomères constitué par les vinyles, les acrylates, les méthacrylates, les acrylamides, les méthacrylamides, les alcools, les monosaccharides, les oxydes de vinyle, les diacides carboxyliques, les dichlorures d'acide silicique, les diesters, les diamines et les monomères.

8. Procédé d'obtention du copolymère selon l'une quelconque des revendications 1 à 7, comprenant les étapes suivantes :
(a) réaction par copolymérisation d'au moins deux unités monomères, dans laquelle au moins une des unités monomères contient un groupe amino aromatique et au moins une des unités monomères contient un cycle aromatique activé, la proportion de l'unité contenant un groupe amino aromatique représentant au moins 0,1 % du nombre total d'unités monomères;
(b) réaction du copolymère obtenu à l'étape (a) avec du nitrite de sodium en milieu acide aqueux pour produire un sel de diazonium dans l'unité monomérique contenant un groupe amino aromatique, et
(c) réaction en milieu basique aqueux du copolymère obtenu à l'étape b) par couplage azoïque avec l'unité monomérique contenant un cycle aromatique activé.

9. Produit comprenant le copolymère selon l'une quelconque des revendications 1 à 7 choisi dans le groupe constitué par les produits liquides, les fibres, les encres et les revêtements pour le papier ou les matériaux textiles et le papier et les matériaux textiles.

10. Matériau papier ou textile comprenant une fibre selon la revendication 9 et/ou, sur au moins une de ses surfaces, l'encre selon la revendication précédente et/ou le revêtement selon la revendication précédente.

11. Papier ou matière textile selon la revendication 10, choisi dans le groupe constitué par le papier d'emballage, d'impression et d'écriture, le carton, les vêtements, les couvertures, les tissus pour la décoration ou l'ameublement, les tissus pour la filtration et les mouchoirs en papier.

12. Procédé de préparation de matériaux papier ou textile comprenant le copolymère selon l'une quelconque des revendications 1 à 7, **caractérisé en ce qu'**il comprend les étapes suivantes :
(a) appliquer sur une ou plusieurs surfaces d'un papier ou d'un matériau textile le produit liquide selon la revendication 9 ; ou
(b) appliquer sur une ou plusieurs surfaces d'un papier ou d'un matériau textile l'encre selon la revendication 9 et/ou le revêtement selon la revendication 9 ; ou
(c) produire un papier ou un matériau textile, ou au moins une de ses parties, en utilisant la fibre selon la revendication 9.

13. Procédé de détection de la contrefaçon et d'authentification des produits comprenant les étapes suivantes :
(a) pulvérisation d'une solution acide de nitrites sur un papier ou un textile comprenant le copolymère selon l'une des revendications 1 à 7 ;
(b) observer le changement de couleur de la surface du papier ou du matériau textile ;
(c) et comprenant en outre une étape de pulvérisation du papier ou du matériau textile avec une solution alcaline après l'étape a).
